# FASCICULE DE BREVET EUROPEEN

(11) **EP 2 504 191 B1**
(45) Date de publication et mention de la délivrance du brevet: **02.09.2015**
(21) Numéro de dépôt: 10805321.6
(22) Date de dépôt: 23.11.2010
(51) Int. Cl.: B60L 5/42, B60M 1/36

(54) **STRUCTURE DE CAPTAGE D'ENERGIE ELECTRIQUE MOTRICE ET AUXILIAIRE POUR UN VEHICULE TERRESTRE**
HILFS- UND ANTRIEBSSTROMAUFNAHMEKONSTRUKTION FÜR LANDFAHRZEUGE
AUXILIARY AND MOTIVE ELECTRIC POWER PICK-UP STRUCTURE FOR LAND VEHICLES

(30) Priorité: 23.11.2009 FR 0905622
(43) Date de publication de la demande: 03.10.2012
(73) Titulaire: NewTL, 67120 Ernolsheim sur Bruche (FR)
(72) Inventeur: ANDRE, Jean-Luc, F-67120 Molsheim (FR)
(74) Mandataire: Merckling, Norbert
(86) Numéro de dépôt international: PCT/IB2010/055363
(87) Numéro de publication internationale: WO 2011/061723

(56) Documents cités:
- DE-C- 301 031
- FR-A5- 2 118 802
- GB-A- 318 666
- GB-A- 320 253

## Description

La présente invention se rapporte à une structure de captage d'énergie électrique motrice et auxiliaire pour un véhicule de transport.

Elle se rapporte plus particulièrement à une structure supérieure de captage, dite de toit, portée par un véhicule terrestre de transport, par exemple un véhicule urbain de transport en commun. Cette structure de captage coopère avec des bras de distribution de l'énergie électrique montés chacun sur un poteau ou autre support, ces poteaux ou supports étant placés le long de la voie de circulation du véhicule.

Pour que la prise de contact mécanique et électrique et le contact électrique glissant d'un patin frotteur d'alimentation sur une structure linéaire de captage s'effectue correctement, plusieurs conditions doivent être réunies.

Il faut d'abord que le contact mécanique se réalise en douceur et progressivement. Il faut ensuite que le contact électrique s'établisse correctement et se poursuive tout au long de la structure de captage.

Pour ce faire, des moyens mécaniques sont à prévoir afin de réaliser et de maintenir un contact mécanique quasi parfait entre les deux surfaces opposées. La qualité de ce contact réclame une géométrie précise et des moyens de rattrapage de toute déviation et irrégularité durant la phase de contact c'est-à-dire d'alimentation électrique.

Le document GB318666 décrit une structure selon le préambule de la revendication 1.

La présente invention a pour but d'établir et de maintenir un contact de qualité entre un patin d'alimentation en énergie électrique et une structure de captage portée par un véhicule terrestre par exemple un véhicule de transport en commun par exemple, formé de plusieurs modules articules entre eux.

Ce but est atteint à l'aide d'une structure selon la revendication 1.

A cet effet, la structure de captage est montée suspendue élastiquement et pneumatiquement sur le véhicule et ceci préférentiellement sur son toit. Une application en latéral et celle sous le véhicule sont également à inclure dans la présente invention. La structure de captage d'énergie électrique selon l'invention peut ainsi être fixée au toit, à une paroi latérale ou à la paroi inférieure ou châssis du véhicule.

L'invention fournit une structure de captage d'énergie électrique motrice et auxiliaire pour un véhicule terrestre, notamment un véhicule urbain de transport en commun articulé ou non, passant à proximité d'une pièce d'alimentation électrique du type frotteur montée sur un support fixe le long de la voie de circulation de ce véhicule et se répétant le long de cette voie pour l'alimentation en énergie électrique motrice et auxiliaire de ce véhicule.

Selon l'invention, cette structure de captage comprend un rail conducteur dont l'une des faces est une surface de glissement pour le frotteur d'alimentation électrique. Cette structure de captage est montée sur des supports isolants fixés sur le véhicule par l'intermédiaire de points de suspension comportant chacun un moyen de suspension élastique et un moyen de suspension commandable par exemple active pneumatique ou hydraulique ou autre.

Plus particulièrement, dans le cas de véhicules articulés, la structure de captage électriquement conductrice et rigide, peut être formée de tronçons successifs de rails conducteurs. Ces tronçons sont montés suspendus élastiquement sur le toit de chaque module d'un véhicule de transport articulé, les tronçons de rail étant reliés entre eux, au niveau des unités d'articulation du véhicule, par une liaison conductrice souple formée par exemple d'un empilement transversal de lames pouvant glisser individuellement ou par groupes les uns sur les autres longitudinalement et par flexion pour absorber les mouvements de roulis, de tangage et de lacet des modules.

Le ou les tronçon(s) d'extrémité forme(nt) chacun un bec ou une rampe permettant au frotteur de contacter progressivement le rail. Il existe deux becs ou rampes dans le cas de véhicules bidirectionnels. Dans le cas de véhicules mono-caisse ou formés de caisses successives la structure de captage n'est composée que d'un ou de plusieurs tronçons de rail.

Des nombreux avantages apportés par l'invention certains sont mentionnés ci-après :
. un contact électrique et mécanique dans des conditions idéales lors de l'alimentation électrique,
. une bonne sécurité électrique par la possibilité d'abaisser la structure de captage par exemple lors des arrêts en station
. une adaptation permanente sans choc(s) aux secousses, vibrations et diverses perturbations possibles dues au roulage,
. une adaptation aux mouvements de roulis, de tangage et de lacet tout en assurant la continuité de l'alimentation électrique,
. un faible niveau de bruit et un filtrage acoustique,
. une facilité de mise en oeuvre,
. une adaptation automatique aux courbes de la voie,
. une modularité permettant de s'adapter à la longueur ou à la composition du véhicule,
. une souplesse pour absorber les variations de hauteurs,
. une simplicité d'installation sur des véhicules déjà opérationnels.

D'autres caractéristiques et avantages de l'invention apparaîtront dans la description qui suit, donnée à titre d'exemple et accompagnée des dessins dans lesquels :
- la figure 1 est une vue de profil d'un véhicule terrestre formé de plusieurs modules articulés entre eux et comportant une structure de captage de toit selon l'invention en position basse ;
- la figure 2 est une vue de profil d'un véhicule terrestre formé de plusieurs modules articulés entre eux et comportant une structure de captage de toit selon l'invention en position haute ;
- la figure 3 est une vue en perspective de la liaison inter-modules d'une structure de captage selon l'invention ;
- les figures 4 et 5 sont des vues agrandies des détails IV et V encerclés respectivement sur les figures 1 et 2 ;
- la figure 6 est une vue schématique en plan de la liaison inter-modules de la figure 3 ;
- les figures 7 et 8 sont des vues schématiques illustrant la déformation de la liaison inter-modules respectivement dans les courbes et dans les passages en creux.

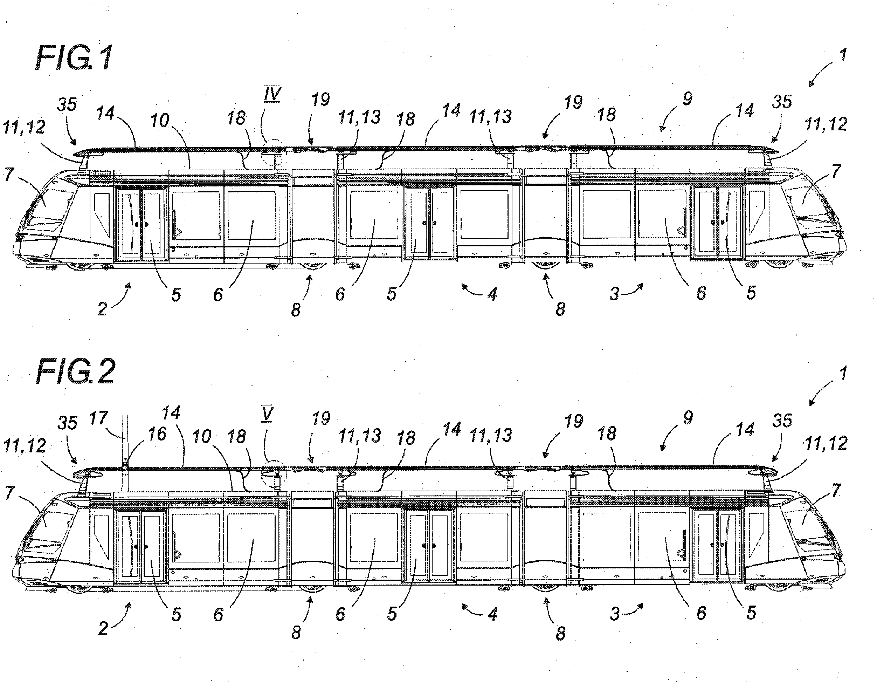

La structure de captage d'énergie électrique motrice et auxiliaire s'applique plus particulièrement, mais non exclusivement, à un véhicule urbain et routier de transport en commun. Il s'agit notamment de véhicules du type de celui représenté sur les figures 1 et 2, c'est-à-dire un véhicule de transport en commun formant une rame 1 constituée d'une suite de plusieurs modules, dont au moins un module,avant 2 et un module arrière 3, ainsi qu'éventuellement un ou plusieurs module(s) intermédiaire(s) tel(s) que 4 ou de véhicules non articulés ou formés d'une succession de caisses. Ils comportent de préférence, tous des portes d'accès telles que 5 et des fenêtres telles que 6, ainsi qu'une cabine de conduite 7 pour les modules d'extrémité avant et arrière 2 et 3. Les modules sont reliés de façon articulée les uns à la suite des autres par des unités d'articulation 8 portées chacune par un essieu guidé ou non.

Le véhicule de transport de personnes ou rame 1 comporte une structure supérieure de captage 9 d'énergie électrique motrice et auxiliaire, montée de préférence mais non exclusivement sur son toit 10 par l'intermédiaire de supports isolants tels que 11.

Dans le mode de réalisation préférentiel représenté, on peut distinguer des supports d'extrémité 12 légèrement en oblique et des supports intermédiaires 13 droits. Les supports isolants 11 sont uniquement présents sur les modules 2, 3, 4 et non pas sur les unités d'articulation 8. Ils sont placés de préférence à chacune des extrémités de chaque module 2, 3 et 4.

La structure de captage 9 est dans son expression la plus générale une ligne électriquement conductrice rigide ou semi-rigide pouvant affecter différentes formes tant en section transversale qu'en longueur. Ainsi, cette ligne peut être filaire ou sous la forme d'un câble, d'un rail ou toute autre forme adaptée. Par ailleurs, son développement longitudinal peut présenter une forme droite, rectiligne ou ondulée ou en zigzags ou autres formes ondulatoires ou à multiples changements de direction ou à variations latérales par écarts ou déviations de part et d'autre d'un axe longitudinal.

La structure de captage 9 est formée de préférence d'une succession de tronçons électriquement conducteurs, par exemple de rails conducteurs tels que 14 présentant une surface supérieure 15, sensiblement plane et lisse, apte à servir de surface de glissement à un patin ou un frotteur d'alimentation électrique 16, porté par un support fixe 17, poteau ou autre, disposé en grand nombre le long de la voie de circulation et espacés les uns des autres selon les nécessités de l'alimentation électrique.

Il existe de nombreux types de supports 17 pouvant être utilisés avec la structure de captage 9 selon l'invention. Il s'agit par exemple, de poteaux, de montants, de panneaux de signalisation, de la face inférieure ou latérale d'un pont ou d'un tunnel, de la façade d'un bâtiment ou d'un abri pour les voyageurs, ou de toute autre structure fixe se trouvant à proximité de la voie de circulation du véhicule.

Ces supports 17 portent chacun un ou plusieurs frotteur(s) 16 fixe(s) qui entre(nt) en contact électrique glissant avec la surface supérieure 15 de la structure de captage 9 se déplaçant par rapport au frotteur 16 du fait de l'avance du véhicule.

Pour alimenter le véhicule ou la rame 1 pendant son trajet, une multitude de supports 17 doivent être prévus tout au long de la voie de circulation du véhicule ou dans des zones localisées. L'espacement entre ces supports est fonction des nécessités d'alimentation en énergie électrice motrice et auxiliaire. Cet espacement peut être choisi de façon qu'il y ait toujours un frotteur 16 en contact avec la structure de captage 9 quelle que soit la position du véhicule 1 sur sa voie de circulation.

Les tronçons 14 par exemple de rail sont reliés électriquement aux bornes d'alimentation du véhicule 1 par un ou plusieurs conducteurs souples d'alimentation tels que 18, présents aux extrémités de la structure de captage 9 ou de préférence pour une plus grande sécurité, au niveau de chaque module 2, 3, 4 afin de pouvoir continuer à assurer l'alimentation électrique du véhicule même en cas d'interruption de la continuité électrique de la structure de captage 9.

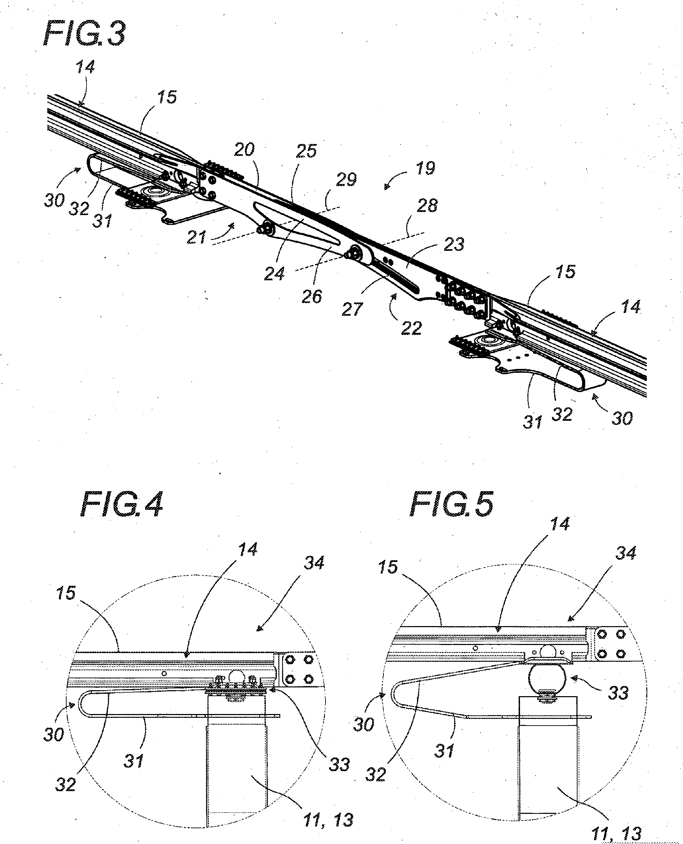

Les tronçons 14 par exemple de rail sont interrompus au niveau de chaque unité d'articulation 8 pour être remplacés par une liaison électriquement conductrice par exemple du type déformable telle que 19 dont un exemple constructif est représenté sur la figure 3.

Dans un autre mode de réalisation, donné à titre d'exemple, la liaison conductrice 19 peut être réalisée par une structure articulée et coulissante destinée à absorber les mouvements des caisses des modules lors du roulage. Dans un autre mode de réalisation, on peut interrompre les tronçons 14 au niveau des articulations, le tronçon suivant pouvant soit recouvrir latéralement le tronçon précédent soit être encore interrompu surtout si le véhicule est doté d'une réserve tampon d'énergie.

La liaison conductrice 19 relie les tronçons 14 par exemple de rail entre eux au niveau de chaque unité d'articulation 8. Cette liaison conductrice 19 est suffisamment élastique pour pouvoir assurer la continuité de l'alimentation électrique, tout en s'adaptant aux différents mouvements relatifs des modules successifs du véhicule ou de la rame 1 pendant le roulage. A cet effet, le chant supérieur 20 de chaque liaison conductrice 19 constitue pour le frotteur d'alimentation électrique 16 la continuation de la piste de glissement constituée par la surface supérieure 15 des tronçons 14 par exemple de rail de la ligne conductrice.

Les liaisons conductrices souples 19 élastiques inter-modules ont pour but d'absorber tous les mouvements possibles de roulis, de tangage et de lacet liés au roulage et à la topologie de la voie de circulation, ainsi que les mouvements de rapprochement et d'éloignement relatifs des modules successifs du véhicule liés à l'accélération, à la décélération ou au freinage du véhicule et d'une manière générale à la dynamique du véhicule.

Comme déjà indiqué, la liaison déformable 19 absorbe tous les mouvements de roulis, de tangage et de lacet tout en assurant la continuité de l'alimentation électrique.

Sur les figures 3 et 6 à 8, on peut voir la liaison conductrice souple 19 qui comprend deux parties, respectivement 21 et 22, articulée entre elles et fixées chacune à l'extrémité de l'un des tronçons 14 par exemple de rail se trouvant en regard et qu'elle relie entre eux.

Selon la réalisation représentée à titre d'exemple, la liaison conductrice souple 19 est formée d'une pluralité de lames ou de groupes de lames longitudinales, par exemple en empilement transversal, venant s'imbriquer les uns ou les unes dans les autres. Il existe au minimum, une lame centrale ou un groupe central 23 de lames, porté par l'une des parties de la liaison 19. La partie 22 ou le groupe central 23 de lames sur l'exemple représenté, vient se faire recouvrir sur chacun de ses flancs et sur une partie de sa longueur par deux lames latérales ou deux groupes latéraux de lames 24 et 25 juxtaposés et portés par la deuxième partie, ici la partie 21 de la liaison 19 qui présente une conformation en fourche 26. L'ensemble est maintenu articulé par boulonnage et une ouverture longitudinale 27 sert de glissière pour permettre un débattement longitudinal destiné à absorber les faibles variations de longueur et de distance dues aux mouvements de tangage et de lacet, ainsi que les rapprochements et les éloignements relatifs des modules successifs du véhicule.

Selon le mode de réalisation représenté, l'extrémité de la fourche 26 est montée pivotante par un axe transversal 28 dans l'ouverture longitudinale 27 lui servant de glissière alors que l'extrémité de la lame centrale ou le paquet central 23 de lames est articulé à pivotement en extrémité autour d'un axe transversal 29 par exemple par un boulon. Ceci apporte une latitude de mouvement permettant d'absorber les différentes sollicitations dynamiques de deux modules successifs entre eux notamment ceux liés au tangage et au lacet.

Par ailleurs, les lames étant flexibles, elles permettent également d'absorber les débattements de roulis par déformation de torsion.

Les tronçons 14 par exemple de rail, sont montés sur les supports isolants d'extrémité 12 ou intermédiaires 13 au moyen d'une double suspension.

Inversement, la double suspension peut être montée sur des supports électriquement isolants qui sont fixés sur le véhicule.

La première suspension est du type à effet élastique. Il s'agit d'une pièce métallique 30 de suspension en lame selon différentes conformations par exemple en forme d'épingle ou d'agrafe, qui comprend une aile inférieure 31 et une aile supérieure 32 jointives et provenant par exemple d'une plaque ou d'une bande métallique pliée pour former une pièce 30 de profil en U couché. L'aile inférieure 31 est fixée au support isolant 11 correspondant et l'aile supérieure 32 à l'extrémité du tronçon 14.

A cette même extrémité du tronçon 14, par exemple de rail, se trouve fixé par un de ses flancs un élément de suspension commandable par exemple active, pneumatique ou hydraulique ou autre 33 par exemple un boudin gonflable ou un bout de tuyau gonflable également fixé par son flanc opposé sur l'extrémité du support isolant 11 correspondant. L'élément 33 dé suspension active, pneumatique ou hydraulique ou autre peut être tout moyen de suspension active, pneumatique ou hydraulique ou autre ou composant actif pneumatique ou hydraulique ou autre par exemple un soufflet. Il forme une liaison élastique entre les extrémités des deux ailes 31 et 32 de la pièce métallique de suspension 30 en forme d'agrafe, constituant ainsi un point de suspension 34.

Il existe un point de suspension 34 à chacune des extrémités de chaque tronçon 14 par exemple de rail.

On a constitué ainsi une suspension composite à double effet, l'un élastique par la pièce métallique 30 de suspension en forme d'agrafe dont l'élasticité assure une faible raideur en torsion permettant à la structure de captage de se conformer aux caractéristiques statiques et dynamiques du bras d'alimentation et l'autre pneumatique ou hydraulique et plus généralement une suspension active c'est-à-dire commandable, par l'élément 33 de suspension pneumatique ou hydraulique qui permet d'amortir les secousses, les chocs et les vibrations et de bénéficier d'un filtrage acoustique efficace.

Grâce à la liaison active commandable, on peut abaisser la structure de captage pour la mettre en position de sécurité, c'est-à-dire hors tension et on peut ensuite la relever pour la mettre en position d'alimentation électrique. Ces mouvements s'effectuent sur commande de façon manuelle, semi-automatique ou entièrement automatique.

La suspension active pneumatique ou hydraulique ou autre, procure l'important avantage de disposer d'un moyen actif permettant de passer d'une position basse à une position haute pour la structure de captage 9 et de la maintenir dans l'une ou l'autre de ces positions le temps nécessaire.

Il peut s'agir notamment de la déconnexion de sécurité lors des arrêts en station.

De plus, cette suspension ne présentant qu'une faible raideur en torsion, apporte une adaptation automatique en présentation de la surface 15 de glissement du tronçon conducteur en face du frotteur du bras d'alimentation pour un contact complet sur toute la surface.

Les moyens de suspension aux points 34 de suspension utilisés pour le relevage ou l'abaissement des tronçons conducteurs peuvent ne comporter qu'une fonction de suspension pure et être associés à des moyens spécifiques de relevage et d'abaissement.

La structure de captage d'énergie électrique selon l'invention présente au moins à l'une de ses extrémités une partie incurvée en pente à surface lisse et transversalement plane formant une rampe inclinée d'engagement 35 en continuité avec l'extrémité de chaque tronçon de rail d'extrémité. Cette rampe inclinée d'engagement 35 sert de surface de prise de contact pour le patin ou le frotteur d'alimentation électrique le long duquel se déplace la structure de captage. Elle peut servir aussi dans sa première partie de surface d'entraînement à un capot de protection du frotteur d'alimentation électrique qui le découvrirait par un pivotement d'escamotage. La forme de cette rampe inclinée d'engagement 35 peut varier. Elle a pour fonction générale de réaliser la prise de contact mécanique et électrique la moins brusque possible et de l'amener progressivement et en douceur sur la surface de glissement 15 de la structure de captage.

Cette rampe inclinée d'engagement 35 est portée par un support spécial d'extrémité comportant une suspension renforcée à deux agrafes métalliques et à élément actif pneumatique ou hydraulique ou autre gonflable pour mieux amortir le choc de la prise de contact.

Il existe une rampe inclinée d'engagement 35 à l'avant et à l'arrière de la structure de captage.

On peut bien entendu, envisager de réaliser d'une autre façon la rampe inclinée d'engagement 35, par exemple sous la forme d'une rampe inclinée séparée de l'extrémité du tronçon de rail et adjacente à celle-ci. Une variante à deux rampes parallèles est également possible, celles-ci ne réalisant que le mouvement d'escamotage de la pièce de protection du frotteur.

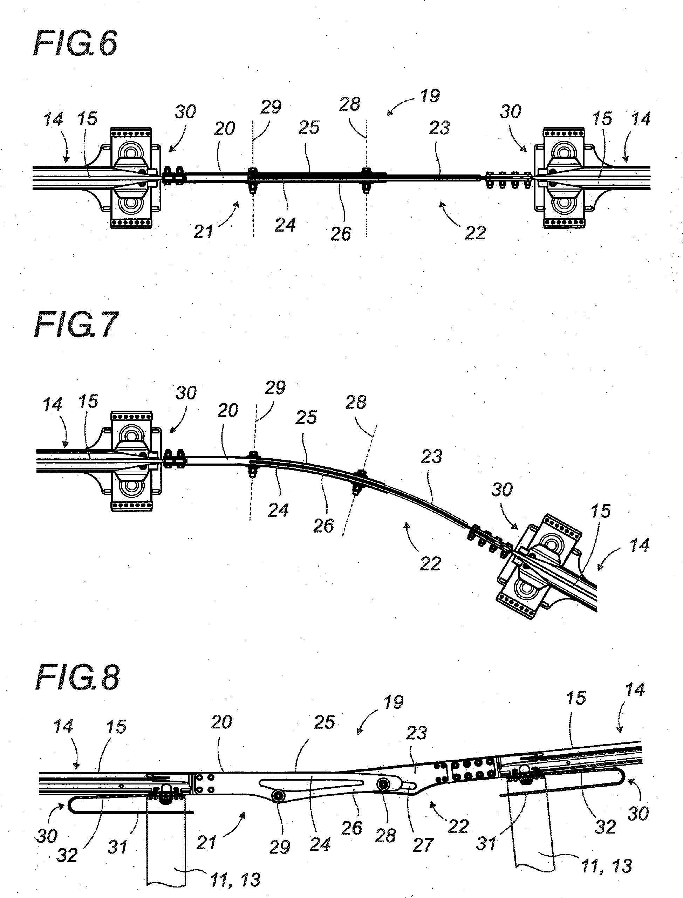

Les figures 7 et 8 représentent pour la première, la déformation de la liaison souple articulée dans une courbe par exemple par virage à gauche et pour la deuxième, dans un passage en creux.

Sur la figure 7 on remarque la déformation des lames par incurvation et le léger glissement au niveau de la fourche.

Sur la figure 8 l'axe transversal en boulon s'est déplacé dans l'ouverture longitudinale 27 alors que l'autre axe transversal 29 reste fixe. Ceci permet d'absorber le faible mouvement de rapprochement dû au passage en creux.

## Revendications

1. Structure de captage d'énergie électrique motrice et auxiliaire pour un véhicule terrestre notamment un véhicule urbain de transport en commun, articulé ou non, formé d'un ou de plusieurs modules passant à proximité d'une pièce d'alimentation électrique du type frotteur montée sur un support fixe le long de la voie de circulation de ce véhicule et se répétant le long de cette voie pour l'alimentation en énergie électrique motrice et auxiliaire de ce véhicule, **caractérisée en ce qu'**elle comprend au moins un conducteur d'au moins une ligne conductrice (14) comportant un conducteur dont la partie supérieure présente une surface pour le glissement d'un frotteur d'alimentation électrique, **en ce qu'**elle est montée sur le véhicule au moyen de supports isolants (11) fixés sur le véhicule par l'intermédiaire de points de suspension (34) commandables (pour l'abaissement et le relevage de la ligne conductrice (14) dans son ensemble ou par parties) afin de mettre au moins le conducteur de la ligne conductrice (14) dans une position adaptée d'alimentation ou dans une position de sécurité correspondant à une déconnexion et **en ce que** deux tronçons conducteurs successifs sont reliés entre eux par une liaison déformable (19) sous la forme d'une liaison conductrice souple constituée d'une pluralité de lames qui forment plusieurs groupes longitudinaux de lames empilées transversalement.

2. Structure de captage d'énergie électrique selon la revendication 1, **caractérisée en ce que** les lames ou les groupes de lames s'imbriquent les uns ou les unes dans les autres.

3. Structure de captage d'énergie électrique selon la revendication 2, **caractérisée en ce que** deux lames ou deux groupes latéraux (24) et (25) de lames forment une fourche (26) recevant entre elles ou entre eux une lame centrale ou un groupe central (23) de lames dont l'extrémité est montée à pivotement par un axe transversal (29) entre ces deux groupes parallèles pour constituer la continuation de la liaison (19).

4. Structure de captage d'énergie électrique selon la revendication 3, **caractérisée en ce que** l'extrémité de la fourche (26) est montée pivotante par un axe transversal (28) dans une ouverture longitudinale (27) lui servant de glissière.

5. Structure de captage d'énergie électrique selon l'une quelconque des revendications précédentes, **caractérisée en ce que** la ligne conductrice (14) est formée de plusieurs tronçons conducteurs.

6. Structure de captage d'énergie électrique selon la revendication 5, **caractérisée en ce que** deux tronçons conducteurs successifs sont séparés par un vide.

7. Structure de captage d'énergie électrique selon l'une quelconque des revendications précédentes, **caractérisée en ce que** la ligne conductrice (14) est relevable ou abaissable dans son ensemble ou par parties.

8. Structure de captage d'énergie électrique selon la revendication 1 ou 7, **caractérisée en ce que** les points de suspension (34) commandables sont des moyens de relevage ou d'abaissement au moins localement de la ligne conductrice (14) ou sont associés à ceux-ci.

9. Structure de captage d'énergie électrique selon la revendication 1, **caractérisée en ce que** les points de suspension (34) commandables comportent un ou des moyen(s) de suspension filtrant les chocs et les bruits de prise de contact et les bruits de frottement.

10. Structure de captage d'énergie électrique selon la revendication 1 ou 8 ou 9, **caractérisée en ce que** les points de suspension (34) comportent au moins un moyen de suspension élastique et un moyen de suspension active pneumatique ou hydraulique ou autre (33) relié chacun à un support isolant (11).

11. Structure de captage d'énergie électrique selon la revendication 10, **caractérisée en ce que** le moyen de suspension élastique comprend une lame souple fixée au support isolant (11) et portant le rail conducteur ou le tronçon de rail conducteur (14).

12. Structure de captage d'énergie électrique selon la revendication 11, **caractérisée en ce que** la lame métallique souple est une agrafe métallique (30) comportant une aile supérieure (31) fixée au rail conducteur (14) et une aile inférieure (32) fixée au support isolant (11).

13. Structure de captage d'énergie électrique selon la revendication 12, **caractérisée en ce que** l'agrafe métallique (30) présente un profil en U couché.

14. Structure de captage d'énergie électrique selon la revendication 10, **caractérisée en ce que** le moyen de suspension active pneumatique ou hydraulique ou autre (33) est un élément gonflable pneumatique ou hydraulique qui relie le rail conducteur (14) au support isolant (11).

15. Structure de captage d'énergie électrique selon l'une quelconque des revendications précédentes **caractérisée en ce qu'**elle est fixée au toit, à une paroi latérale ou à la paroi inférieure du véhicule.

16. Structure de captage d'énergie électrique selon la revendication 1 ou 15, **caractérisée en ce qu'**au moins une rampe d'engagement (35) est présente à l'une ou l'autre des extrémités de la structure de captage.

## Patentansprüche

1. Struktur zur Aufnahme elektrischer Antriebs- und Hilfsenergie für ein Landfahrzeug, insbesondere ein artikuliertes oder nicht artikuliertes, städtisches Fahrzeug für den öffentlichen Verkehr, das aus einem oder mehreren Modulen gebildet ist, die in der Nähe eines elektrischen Versorgungsteils vom Typ Schleiffeder durchquert, welches auf einem festen Träger entlang des Verkehrswegs dieses Fahrzeugs montiert ist und sich entlang dieses Weges für die Versorgung mit elektrischer Antriebs- und Hilfsenergie dieses Fahrzeugs wiederholt, **dadurch gekennzeichnet, dass** sie wenigstens einen Leiter wenigstens einer leitfähigen Leitung (14) umfasst, die einen Leiter umfasst, dessen oberer Teil eine Oberfläche zum Gleiten einer elektrischen Versorgungs-Schleiffeder aufweist, dass sie auf dem Fahrzeug mittels isolierenden Trägermitteln (11) montiert ist, die auf dem Fahrzeug anhand von Aufhängungspunkten (34) montiert ist, die (zum Absenken und Anheben der leitfähigen Leitung (14) insgesamt oder teilweise) steuerbar sind, um wenigstens den Leiter der leitfähigen Linie (14) in einer geeigneten Versorgungsposition oder in einer Sicherheitsposition zu platzieren, die einer Abschaltung entspricht, und dass zwei sukzessive leitende Abschnitte untereinander durch eine verformbare Verbindung (19) in Form einer elastischen leitenden Verbindung verbunden sind, die aus einer Vielzahl von Lamellen gebildet ist, die mehrere längliche Gruppen von quer gestapelten Lamellen bilden.

2. Struktur zur Aufnahme von elektrischer Energie gemäß Anspruch 1, **dadurch gekennzeichnet, dass** die Lamellen oder die Lamellengruppen jeweils ineinander einrasten.

3. Struktur zur Aufnahme von elektrischer Energie gemäß Anspruch 2, **dadurch gekennzeichnet, dass** die zwei Lamellen oder zwei lateralen Gruppen (24) und (25) von Lamellen eine Gabel (26) bilden, die jeweils zwischen ihnen eine zentrale Lamelle oder eine zentrale Gruppe (23) von Lamellen bilden, deren Ende schwenkbar durch eine transversale Achse (29) zwischen diesen zwei parallelen Gruppen montiert ist, um die Fortführung der Verbindung (19) zu bilden.

4. Struktur zur Aufnahme von elektrischer Energie gemäß Anspruch 3, **dadurch gekennzeichnet, dass** das Ende der Gabel (26) schwenkbar durch eine Querachse (28) in einer länglichen Öffnung (27) montiert ist, die ihr als Gleitschiene dient.

5. Struktur zur Aufnahme von elektrischer Energie gemäß einem der voranstehenden Ansprüche, **dadurch gekennzeichnet, dass** die leitende Linie (14) aus mehreren Leiterabschnitten gebildet ist.

6. Struktur zur Aufnahme von elektrischer Energie gemäß Anspruch 5, **dadurch gekennzeichnet, dass** zwei aufeinanderfolgende Leiterabschnitte durch einen Freiraum getrennt sind.

7. Struktur zur Aufnahme von elektrischer Energie gemäß einem der voranstehenden Ansprüche, **dadurch gekennzeichnet, dass** die leitfähige Linie (14) insgesamt oder teilweise anhebbar oder absenkbar ist.

8. Struktur zur Aufnahme von elektrischer Energie gemäß Anspruch 1 oder 7, **dadurch gekennzeichnet, dass** die steuerbaren Aufhängungspunkte (34) wenigstens lokal Anhebe- oder Absenkungsmittel der leitfähigen Linie (14) sind oder diesen zugeordnet sind.

9. Struktur zur Aufnahme von elektrischer Energie gemäß Anspruch 1, **dadurch gekennzeichnet, dass** die steuerbaren Aufhängungspunkte (34) ein oder mehrere Aufhängungsmittel umfassen, die den Aufprall und die Geräusche der Kontaktaufnahme und die Reibungsgeräusche filtern.

10. Struktur zur Aufnahme von elektrischer Energie gemäß Anspruch 1 oder 8 oder 9, **dadurch gekennzeichnet, dass** die Aufhängungspunkte (34) wenigstens ein elastisches Aufhängungsmittel und ein aktives pneumatisches oder hydraulisches oder anderes Aufhängungsmittel (33) umfassen, die jeweils an einen isolierenden Träger (11) angeschlossen sind.

11. Struktur zur Aufnahme von elektrischer Energie gemäß Anspruch 10, **dadurch gekennzeichnet, dass** das elastische Aufhängungsmittel eine am isolierenden und die Leiterschiene oder den Leiterschienenabschnitt (14) tragenden Träger (11) befestigte flexible Lamelle umfasst.

12. Struktur zur Aufnahme von elektrischer Energie gemäß Anspruch 11, **dadurch gekennzeichnet, dass** die flexible Metalllamelle eine Metallklammer (30) ist, die einen oberen Flügel (31) umfasst, der an der Führungsschiene (14) befestigt ist, und einen unteren Flügel (32), der am isolierenden Träger (11) befestigt ist.

13. Struktur zur Aufnahme von elektrischer Energie gemäß Anspruch 12, **dadurch gekennzeichnet, dass** die Metallklammer (30) ein liegendes, U-förmiges Profil aufweist.

14. Struktur zur Aufnahme von elektrischer Energie gemäß Anspruch 10, **dadurch gekennzeichnet, dass** das aktive, pneumatische oder hydraulische oder andere Aufhängungsmittel (33) ein pneumatisches oder hydraulisches aufblasbares Element ist, das die Leitschiene (14) mit dem isolierenden Träger (11) verbindet.

15. Struktur zur Aufnahme von elektrischer Energie gemäß einem der voranstehenden Ansprüche, **dadurch gekennzeichnet, dass** sie am Dach, an einer Seitenwand oder an der unteren Wand des Fahrzeugs befestigt ist.

16. Struktur zur Aufnahme von elektrischer Energie gemäß Anspruch 1 oder 15, **dadurch gekennzeichnet, dass** wenigstens eine Eingriffsrampe (35) an dem einen oder dem anderen Ende der Struktur zur Aufnahme vorhanden ist.

## Claims

1. A structure for collecting motive and auxiliary electrical energy for a land vehicle, especially a public urban transportation vehicle, articulated or non-articulated, formed of one or more modules passing close to an electrical power supply device of supply shoe type mounted on a stationary support along the route of the vehicle and duplicated along this route to supply the vehicle with motive and auxiliary electrical energy, **characterized in that** it comprises at least one conductor of at least one conductive line (14) comprising a conductor, the upper portion of which has a surface on which a electrical supply shoe slides, **in that** it is mounted on the vehicle using electrically insulated supports (11) affixed to the vehicle through controllable suspension points (34) (for lowering and raising the conductive line (14), either in its entirety or in sections) in order to put at least the conductor of the conductive line (14) into a suitable supply position or into a safety position corresponding to disconnection and **in that** two successive conductive segments are joined to each other by a deformable connector (19) in the form of a flexible conductive connection consisting of a plurality of leaves that form several longitudinal groups of leaves stacked transversely.

2. A structure for collecting electrical energy according to claim 1, **characterized in that** the leaves or groups of leaves overlap one another.

3. A structure for collecting electrical energy according to claim 2, **characterized in that** two leaves or two lateral groups (24) and (25) of leaves form a fork (26), receiving between them a central leaf or a central group (23) of leaves, the extremity of which is attached to pivot by a transverse axle (29) between these two parallel groups to constitute the continuation of the connection (19).

4. A structure for collecting electrical energy according to claim 3, **characterized in that** the extremity of the fork (26) is attached to pivot by a transverse axle (28) in a longitudinal opening (27) that forms a groove for it.

5. A structure for collecting electrical energy according to any one of the preceding claims, **characterized in that** the conductive line (14) is formed of several conductive segments.

6. A structure for collecting electrical energy according to claim 5, **characterized in that** two successive conductive segments are separated by an empty area.

7. A structure for collecting electrical energy according to any one of the preceding claims, **characterized in that** the conductive line (14) can be raised or lowered, either in its entirety or in sections.

8. A structure for collecting electrical energy according to claim 1 or 7, **characterized in that** the controllable suspension points (34) are means for raising or lowering the conductive line (14) at least locally or they are associated with those means.

9. A structure for collecting electrical energy according to claim 1, **characterized in that** the controllable suspension points (34) comprise one or more suspension means for filtering shocks, electrical contact noise and electrical collection noise.

10. A structure for collecting electrical energy according to claim 1 or 8 or 9, **characterized in that** the suspension points (34) comprise at least one flexible suspension means and one pneumatic or hydraulic or other type active suspension means (33) each connected to a insulating support (11).

11. A structure for collecting electrical energy according to claim 10, **characterized in that** the flexible suspension means comprises a flexible leaf affixed to the insulating support (11) and supporting the conductive rail or the segment of conductive rail (14).

12. A structure for collecting electrical energy according to claim 11, **characterized in that** the flexible metal leaf is a metal clamp (30) comprising an upper blade (31) affixed to the conductive rail (14) and a lower blade (32) affixed to the insulating support (11).

13. A structure for collecting electrical energy according to claim 12, **characterized in that** the metal clamp (30) has a recumbent U shape.

14. A structure for collecting electrical energy according to claim 10, **characterized in that** the pneumatic, hydraulic or other type active suspension means (33) is a pneumatic or hydraulic expandable element joining the conductive rail (14) to the insulating support (11).

15. A structure for collecting electrical energy according to any one of the preceding claims **characterized in that** it is affixed to the roof, to a lateral wall, or to the lower wall of the vehicle.

16. A structure for collecting electrical energy according to claim 1 or 15, **characterized in that** at least one engaging ramp (35) is present at one or the other of the extremities of the collection structure.
